# EUROPÄISCHE PATENTANMELDUNG

(11) **EP 4 588 405 A1**
(43) Veröffentlichungstag der Anmeldung: **23.07.2025**
(21) Anmeldenummer: 25151799.1
(22) Anmeldetag: 14.01.2025
(51) Int. Cl.: A47J 31/52, A47J 31/44

(54) **GETRÄNKEBEREITER MIT STEUERBAREM BETRIEB UND VERFAHREN ZUR BETRIEBSSTEUERUNG EINES GETRÄNKEBEREITERS**

(30) Priorität: 17.01.2024 DE 102024200388
(71) Anmelder: WMF GmbH, 73312 Geislingen/Steige (DE)
(72) Erfinder: SCHNEIDER, Oliver, 73312 Geislingen/Steige (DE); STARTZ, Armin, 89197 Weidenstetten (DE); JOOS, Stephan, 73312 Geislingen/Türkheim (DE)
(74) Vertreter: Pfenning, Meinig & Partner mbB

(57) **Zusammenfassung**

Die vorliegende Erfindung betrifft einen Getränkebereiter mit steuerbarem Betrieb sowie ein Verfahren zur Betriebssteuerung eines Getränkebereiters mit einer Brüheinheit, einem Vorratsbehälter für mindestens ein Getränk, mindestens eine Erfassungseinheit zur Erfassung des Füllstands im Vorratsbehälter, der Menge des in der Brüheinheit gebrühten Getränks und/oder der Menge des vom Nutzer verbrauchten Getränks, eine mit der mindestens einen Erfassungseinheit kommunizierende Auswerteeinheit, die derart ausgebildet ist, dass sie die von der Erfassungseinheit übermittelten Daten auswertet und daraus die Menge von neu zu brühendem Getränk ermittelt sowie eine Steuerungseinheit zur Steuerung der Menge des in der Brüheinheit zu brühenden Getränks zur gewünschten Füllmenge im Vorratsbehälter basierend auf dem Auswertungsergebnis der Auswertungseinheit. Ebenso betrifft die Erfindung ein Verfahren zur Betriebssteuerung eines Getränkebereiters.

## Beschreibung

Die vorliegende Erfindung betrifft einen Getränkebereiter mit steuerbarem Betrieb sowie ein Verfahren zur Betriebssteuerung eines Getränkebereiters mit einer Brüheinheit, einem Vorratsbehälter für mindestens ein Getränk, mindestens eine Erfassungseinheit zur Erfassung des Füllstands im Vorratsbehälter, der Menge des in der Brüheinheit gebrühten Getränks und/oder der Menge des vom Nutzer verbrauchten Getränks, eine mit der mindestens einen Erfassungseinheit kommunizierende Auswerteeinheit, die derart ausgebildet ist, dass sie die von der Erfassungseinheit übermittelten Daten auswertet und daraus die Menge von neu zu brühendem Getränk ermittelt sowie eine Steuerungseinheit zur Steuerung der Menge des in der Brüheinheit zu brühenden Getränks zur gewünschten Füllmenge im Vorratsbehälter basierend auf dem Auswertungsergebnis der Auswertungseinheit. Ebenso betrifft die Erfindung ein Verfahren zur Betriebssteuerung eines Getränkebereiters.

Um die Ausgabeleistung einer Kaffeemaschinen zu erhöhen, wird Kaffee nicht nur in Einzelbrühungen tassenweise gebrüht und ausgegeben, sondern üblicherweise zusätzlich in größeren Mengen (Chargen) von z.B. 0,5 L oder 1 L in einen Vorratsbehälter gebrüht und dort für die Ausgabe bevorratet. Dies hat den Vorteil, dass die Ausgabe dann unabhängig von dem Kaffeebrühen erfolgen kann, d.h. die Zeit, die für eine Brühung benötigt wird, spielt für die Ausgabe keine Rolle. Die Ausgabe kann dosiert oder undosiert erfolgen, d.h. durch ein manuelles Starten bzw. Stoppen der Dosierung. Die Bevorratungsmengen liegen in der Regel zwischen 0,5 L und 5 L. Die Vorratsbehälter sind dabei in der Regel isoliert und haben für heißen Kaffee oft auch eine aktive Beheizung, um das Getränk während der Bevorratung warm zu halten. Bei kalten Kaffeegetränken wird hingegen keine Beheizung benötigt. Somit können sowohl heiße als auch kalte Getränke gebrüht und bevorratet werden.

Der Füllstand kann z.B. mit Füllstandssonden überwacht werden. In der einfachsten Form sind dies Sonden, die den Minimalstand und den Maximalstand überwachen. Bei Erreichen des minimalen Füllstands, der im Getränkebereiter vorgegeben ist oder durch den Benutzer vorgegeben wird, wird ein Nachbrühvorgang ausgelöst, um den Behälter wieder zu befüllen.

Die Erfassung der Bevorratungszeit als Indikator der Kaffeefrische ist bereits aus der EP 3 718 445 A1 und der DE 10 2014 211 094 A1 bekannt. Hierin wird auch eine Steuerung beschrieben, mit der eine Kaffeemaschine abhängig von ihrer Nutzung gesteuert wird.

Die EP 3 718 445 A1 offenbart eine selbstlernende Kaffeemaschine. Einschaltund Ausschaltzeiten, Stand-by-Modus, Getränkeart und Parameter werden mittels Kl erfasst und ausgewertet, um zukünftige Einschalt-, Ausschaltzeiten, Stand By-Modus, Getränkearten sowie Getränkeparameter zu ermitteln und festzulegen.

Die DE 10 2014 211 094 A1 offenbart die Aufzeichnung eines Benutzerprofils und berechnet daraus die Wahrscheinlichkeit einer künftigen Benutzung. Aus der aktuellen Nutzung und einem Wahrscheinlichkeitsprofil wird die künftige Nutzung errechnet und entsprechende Betriebsparameter sowie eine Menüauswahl bereitgestellt, um die Möglichkeit einer Reinigung zuzulassen. Die Wahrscheinlichkeitsprofile werden dabei in einer Cloud gespeichert, ausgewertet und zur Verfügung gestellt mittels Internet, LAN oder WLAN zur Verfügung gestellt.

Ausgehend hiervon war es Aufgabe der vorliegenden Erfindung, einen Getränkebereiter bereitzustellen, der eine Steuerung der Befüllung des Vorratsbehälters ermöglicht im Hinblick auf die Kaffeequalität, die Bevorratungszeit und die Kaffeevergeudung durch zu lange Bevorratung.

Diese Aufgabe wird mit dem Getränkebereiter mit steuerbarem Betrieb mit den Merkmalen des Anspruchs 1 und das Verfahren zur Betriebssteuerung eines Getränkebereiters mit den Merkmalen des Anspruchs 7 gelöst. Die weiteren abhängigen Ansprüche beschreiben vorteilhafte Weiterbildungen.

Erfindungsgemäß wird ein Getränkebereiter mit steuerbarem Betrieb bereitgestellt, der folgende Komponenten enthält:
a) eine Brüheinheit,
b) einen Vorratsbehälter für mindestens ein Getränk,
c) mindestens eine Erfassungseinheit zur Erfassung des Füllstands im Vorratsbehälter, der Menge des in der Brüheinheit gebrühten Getränks und/oder der Menge des vom Nutzer verbrauchten Getränks,
d) eine mit der mindestens einen Erfassungseinheit kommunizierende Auswerteeinheit, die derart ausgebildet ist, dass sie die von der Erfassungseinheit übermittelten Daten auswertet und daraus die Menge von neu zu brühendem Getränk ermittelt, sowie
e) eine Steuerungseinheit zur Steuerung der Menge des in der Brüheinheit zu brühenden Getränks zur gewünschten Füllmenge im Vorratsbehälter basierend auf dem Auswertungsergebnis der Auswertungseinheit.

Es ist bevorzugt, dass die mindestens eine Erfassungseinheit eine aktive Sensorik (d. h. einen Sensor) aufweist oder daraus besteht, wobei die aktive Sensorik (d. h. der Sensor) insbesondere ausgewählt ist aus der Gruppe bestehend aus Füllstandsensoren, Füllstandssonden und Kombinationen hiervon.

Alternativ oder zusätzlich dazu ist es bevorzugt, dass die Erfassungseinheit eine passive Sensorik aufweist, wobei diese auf einer Berechnung, insbesondere über einen Algorithmus, beruht. Die passive Sensorik ist bevorzugt konfiguriert, eine Getränkemenge (z. B. Kaffeemenge), die in den Vorratsbehälter fließt und/oder die aus dem Vorratsbehälter abfließt, zu berechnen. Besonders bevorzugt ist die passive Sensorik konfiguriert, ein erstes mathematisches Produkt aus einer Öffnungsdauer eines ersten Ventils des Getränkebereiters und einem ersten Volumenstrom von Getränk (z. B. Kaffee) durch das erste Ventil und in den Vorratsbehälter hinein zu berechnen und ein zweites mathematisches Produkt aus einer Öffnungsdauer eines zweiten Ventils des Getränkebereiters und einem zweiten Volumenstrom von Getränk (z. B. Kaffee) durch das zweite Ventil und aus dem Vorratsbehälter heraus zu berechnen. Die passive Sensorik ist insbesondere konfiguriert, eine im Vorratsbehälter verfügbare Getränkemenge (z. B. Kaffeemenge) aus einer Differenz des ersten und zweiten mathematischen Produkts zu ermitteln. Beispielsweise indem bekannt ist, wie lange (zeittechnisch) ein Ventil geöffnet ist, über das Kaffee in den Vorratsbehälter fließt. Dazu ist ebenfalls bekannt, wie hoch ein Volumenstrom des Kaffees beim Einfließen in den Vorratsbehälter ist. Somit kann die Kaffeemenge, welche in den Vorratsbehälter fließt, berechnet werden, beispielsweise indem der Volumenstrom (ml/s) über die Zeit (s) integriert wird. Gleiches kann für den abfließenden, d.h. in den Vorratsbehälter dosierten und/oder entsorgten, Kaffee berechnet werden. Die Differenz aus zugeflossener und abgeflossener Menge ergibt dabei die noch verfügbare Kaffeemenge im Vorratsbehälter.

Eine bevorzugte Ausführungsform sieht vor, dass die Steuerungseinheit derart ausgebildet ist, dass verschiedene Grundeinstellungen in der Steuerungseinheit hinterlegt sind, wobei diese Grundeinstellungen vom Benutzer hinsichtlich auswählbarer Parameter manuell veränderbar sind und als mindestens ein Betriebsmodus einstellbar sind. Der mindestens eine Betriebsmodus ergibt sich also durch manuelle Einstellung der Grundeinstellungen durch den Nutzer.

Die Parameter zur manuellen Einstellung oder Veränderung der Grundeinstellung(en) hinsichtlich des mindestens einen Betriebsmodus umfassen vorzugsweise Werte, die unmittelbar oder mittelbar auf eine Performance, eine Kaffeequalität und eine Kaffeevergeudung schließen lassen. Die Kaffeevergeudung ergibt sich zwangsläufig aus den beiden anderen Werten.

Verschiedene Betriebsmodi, die sich je nach Gewichtung oder Ausprägung aufgrund der gewählten Parameter ergeben, sind beispielsweise ein Vollastmodus (der in seinen Ausprägungen auch Zwischenlasten umfassen kann, wie beispielsweise eine Teillast), ein Frischemodus sowie ein Effizienzmodus, wobei zwischen diesen Betriebsmodi auch Übergangsmodi einstellbar sind. Somit kann als der mindestens eine Betriebsmodus ein Betriebsmodus eingestellt werden, der ausgewählt ist aus der Gruppe bestehend aus Volllastmodus, Frischemodus und Effizienzmodus, wobei zwischen diesen Betriebsmodi auch Übergangsmodi einstellbar sind, und wobei der Frischemodus insbesondere umfasst, eine im Vorratsbehälter befindliche, ältere Brühcharge mit frisch gebrühtem Getränk (z. B. Kaffee) zu vermengen. Der Vorteil ist, dass durch die Wahlmöglichkeit eines solchen Frischemodus einerseits sichergestellt werden kann, dass frische Getränke vom Getränkebereiter bezogen werden und andererseits eine Getränkevergeudung vermieden werden kann, also der Betrieb des Getränkebereiters ökonomischer wird.

Ein Unterschied zwischen einer Grundeinstellung und einem Betriebsmodus ist also, dass sich der Betriebsmodus aus einer Veränderung der gewählten Grundeinstellung ergibt.

Die Kaffeequalität kann dabei auch als Frischegrad bezeichnet werden, derjeweils ein spezifischer Wert hinterlegt ist, wobei dieser vorzugsweise rechnerisch ermittelt wird. Der Wert kann vorzugsweise als Funktion in Abhängigkeit der Zeit und der Brühmenge verfügbar sein. Beispielsweise kann vorgesehen sein, dass eine frischgebrühte Kaffeecharge einen Frischegrad von 1,0 aufweist. Im zeitlichen Verlauf kann dieser Wert kleiner werden, beispielsweise durch eine Multiplikation mit der hinterlegten Funktion. Wird im zeitlichen Verlauf beispielsweise die im Vorratsbehälter befindliche ältere Brühcharge mit frisch gebrühten Kaffee vermengt, würde dies wiederum zu einer Erhöhung des Frischegrads führen. Somit ist bei der Bestimmung eines aktuellen Frischegrads, immer eine zugeführte sowie eine abgeführte Menge an Kaffee zu berücksichtigen.

Es ist weiter bevorzugt, dass der Getränkebereiter, bevorzugt die Auswerteeinheit des Getränkebereiters, basierend auf bisherigen Verbrauchswerten in Bezug auf eine Menge eines vom Nutzer verbrauchten Getränks eine Kl-gestützte Vorhersage von zukünftigen Verbrauchswerten in Bezug auf eine Menge eines vom Nutzer verbrauchten Getränks generiert, wobei die zukünftigen Verbrauchswerte in Abhängigkeit von Messdaten von mindestens einer Messeinheit, die sich auf Umgebungsparameter beziehen, generiert werden, wobei die mindestens eine Messeinheit bevorzugt so ausgebildet ist, dass als Umgebungsparameter ein Parameter ausgewählt aus der Gruppe bestehend aus Jahreszeit, Uhrzeit, Umgebungstemperatur, Lokalität, Wetter, Verkehrslage in der Umgebung des Getränkebereiters und Kombinationen dieser Parameter erfassbar ist/sind. Besonders bevorzugt sind alle diese Parameter erfassbar. Der Vorteil an dieser Ausgestaltungsform ist, dass eine Menge von dem mindestens einen Getränk, die im Vorratsbehälter des Getränkebereiters bereitgestellt wird, basierend auf der Vorhersage von zukünftigen Verbrauchswerten erfolgen kann und somit "maßgeschneidert" auf zukünftige Verbrauchswerte erfolgen kann. Damit kann besser sichergestellt werden, dass im Vorratsbehälter das mindestens eine Getränk (z. B. Kaffee) in kurzer Bevorratungszeit und somit hoher Qualität und vorliegt und eine Vergeudung des mindestens einen Getränks durch eine zu lange Bevorratung reduziert bis nicht vorhanden ist.

Alternativ oder zusätzlich zu der Kl-gestützten Vorhersage kann durch den Getränkebereiter, bevorzugt durch die Auswerteeinheit des Getränkebereiters, die Vorhersage von zukünftigen Verbrauchswerten in Bezug auf eine Menge eines vom Nutzer verbrauchten Getränks auch auf Basis von mathematischen Berechnungen (d. h. rechnerisch) erfolgen, beispielsweise auf Basis einer gewichteten Mittelwertbildung. Auch in diesem Fall können die zukünftigen Verbrauchswerte in Abhängigkeit von Messdaten von mindestens einer Messeinheit, die sich auf Umgebungsparameter beziehen, generiert werden, wobei die mindestens eine Messeinheit bevorzugt so ausgebildet ist, dass als Umgebungsparameter ein Parameter ausgewählt aus der Gruppe bestehend aus Jahreszeit, Uhrzeit, Umgebungstemperatur, Lokalität, Wetter, Verkehrslage in der Umgebung des Getränkebereiters und Kombinationen dieser Parameter erfassbar ist/sind. Besonders bevorzugt sind alle diese Parameter erfassbar. Auch durch diese Ausgestaltungsform kann besser sichergestellt werden, dass im Vorratsbehälter das mindestens eine Getränk (z. B. Kaffee) in kurzer Bevorratungszeit und somit hoher Qualität und vorliegt und eine Vergeudung des mindestens einen Getränks durch eine zu lange Bevorratung reduziert bis nicht vorhanden ist.

Die Mittelwertbildung kann dabei beispielsweise wie folgt ablaufen: berücksichtigt werden Getränke gleichen Typs (beispielsweise Espresso, Filterkaffee usw.), die - auf einen gegenwärtigen Zeitpunkt bezogen - in der Vergangenheit abgerufen wurden, wobei nur diejenigen Getränke berücksichtigt werden, die an einem gleichen Wochentag und zu einer gleichen Uhrzeit ausgegeben wurden. Beispielsweise werden Getränke, die mehr als eine Woche in der Vergangenheit liegen weniger stark gewichtet. Die Gewichtung ist zeittechnisch und in deren Ausprägung beliebig einstellbar. Optional können auch Daten zu Getränken, die auf anderen Maschinen erzeugt wurden, dafür in Betracht gezogen werden. Beispielsweise erfolgt für diese Getränke ebenso eine weniger starke Gewichtung.

Die Steuerung der Befüllung und der Füllmenge erfolgt somit erfindungsgemäß nicht nur über den Füllstand oder die Zeit, sondern es werden mehrere Parameter berücksichtigt. Hierzu werden nachfolgende Modi berücksichtigt, welche auf einer Grundeinstellung basieren, aber auch vom Benutzer in einem vordefinierten Bereich frei festgelegt werden können, nämlich im Rahmen der beschriebenen Parameter:
- Volllastmodus
   Der Vorratsbehälter ist immer maximal befüllt, um jederzeit die höchste Ausgabegeschwindigkeit sicher zu stellen.
   Ist der Schwellenwert, der einen Nachbrühvorgang auslöst, auf einen hohen Wert eingestellt, z.B. bei einem 4 L Vorratsbehälter und 0,5 L als größte Nachbrühcharge so kann ein Schwellenwert von z.B. 3,5 L eingestellt werden. Dadurch wird sichergestellt, dass nach einem Getränkebezug sofort nachgebrüht werden kann, um eine maximale Befüllung zu erreichen. Die Nachbrühchargen können in ihrer Menge auch dynamisch geregelt werden. Wird eine geringere Menge entnommen, wird unmittelbar eine kleinere Brühcharge nachgebrüht. Sofern eine größere Menge oder mehrere Mengen in kürzere Zeit entnommen wird, wird die Chargengröße entsprechend angepasst. Ein geänderter, z.B. abgeschwächter, Volllastmodus, könnte den Vorratsbehälter nur mit einer Mindestmenge befüllen und erst bei größeren Mengen wird eine Unterbrechung durch Nachbrühen akzeptiert.
- Frischemodus
   Der Frischemodus arbeitet mit sehr kurzen Bevorratungszeiten, um insbesondere immer maximal frischen Kaffee auszugeben. So kann bei Erreichen einer vordefinierten minimalen Frische, die z.B. einem Frischewerte von 80% entspricht, ein Hinweis an den Benutzer oder ein automatisches Entleeren des Vorratsbehälters erfolgen und anschließend frischer Kaffee gebrüht werden. Ein abgeänderter Frischemodus, bei dem beispielsweise ein voreingestellter Schwellwert für die Frische bei 50% liegt, weist eine möglichst lange Bevorratungszeit auf, wobei eine nachlassende Kaffeequalität akzeptiert wird. Im Frischemodus wird die Kaffeequalität oder auch der Frischegrad so definiert, dass frisch gebrühter und ausgegebener Kaffee die beste Qualität darstellt. Über die Zeit baut diese Kaffeequalität immer weiter ab, da beim Warmhalten von Kaffee über die Zeit flüchtige Aromen entweichen, die den Geschmack von frischem Kaffee ausmachen. Je nach Geschmacksempfinden und Qualitätsbewusstsein sind nach 1 bis 2 Stunden deutliche Unterschiede zu einem frisch gebrühten Kaffee zu bemerken.
   Der Steuerung berücksichtigt nicht nur den Füllstand des Vorratsbehälters, sondern auch die noch vorherrschende Qualität des Kaffees. Dies erfolgt über den Frischegrad oder Frischefaktor, welcher eine zeitabhängige Funktion ist. Der Frischefaktor stellt dabei eine Art virtuellen Sensor dar, der dann auch einen Schwellwert besitzen kann und die zumindest teilweise Entleerung des Vorratsbehälters auslöst. Der Frischefaktor bildet dabei einen rechnerischen Wert, der von dem Benutzer nicht veränderbar ist, jedoch ist ein Schwellwert dazu einstellbar.
   Durch eine teilweise Entleerung und Nachbrühung kann die Qualität im Vorratsbehälter über einen längeren Zeitraum auf einem gewissen Niveau gehalten werden. Dies kann auch durch dynamische Brühchargen erfolgen, d.h. wenn eine bestimmte Kaffeemenge bereits 90 min aufbewahrt wird, wird eine bestimmte Menge frischen Kaffeemenge dazu gebrüht, so dass durch die Vermischung der beiden Kaffeemenge für die Gesamtmenge ein Frischefaktor erzielt, der einer Aufbewahrungszeit von 45 min entspricht.
- Effizienzmodus
   Im Effizienzmodus_soll möglichst wenig Kaffee vergeudet werden bzw. es wird ein Entleeren des Vorratsbehälters akzeptiert. So kann z.B. der Schwellwert, der eine Nachbrühung auslöst, auf einen niedrigen Wert von 0,3 L bei einem 4 L Vorratsbehälter eingestellt werden. Die Nachbrühungen erfolgen dann mit der effizientesten Chargengröße und einem geringen Kaffeeverlust. Bei extremen Zugeständnisse an die Kaffeequalität wäre auch ein komplettes Aufbrauchen der Bevorratungsmenge vor der Nachbrühung möglich, um den Kaffeeverlust zu vermeiden bzw. zu minimieren.

Die beschriebenen drei Modi korrelieren miteinander und sind in dem Getränkebereiter mit Standardwerten in der Steuerung als Grundeinstellung hinterlegt, können aber vom Benutzer in einem vorgegebenen Bereich auf Basis der Parameter individuell verändert werden. Die Eingabe der drei Parameter durch den Benutzer kann dabei auf unterschiedliche Arten erfolgen. So können alphanumerische Angaben (z.B. Min, Medium, Max) numerische Angaben (z.B. Zahlenbereich 1 bis 10) oder auch grafische Angaben (z.B. ein verschiebbarer Balken, der über mechanische Tasten oder Touch Screen-Tasten eingestellt werden kann) verwendet werden.

Zur Steuerung einer bedarfsgerechten Befüllung werden folgende Gewichtungsfaktoren verwendet:
- Erstellen von Verbrauchsprofilen über einen rollierenden Zeitraum (täglich, wöchentlich, monatlich, jährlich oder auch saisonal). Unter saisonal kann z.B. Sommerbetrieb, Winterbetrieb verstanden werden, wie auch z.B. Biergarten geöffnet oder geschlossen oder Ferienzeit ja / nein.
- Mindestens ein Profil wird erstellt oder angepasst verwendet. Durch die rollierende Erfassung der Verbrauchswerte findet eine automatische Anpassung an Veränderungen des Verbrauchsverhaltens statt. Optional kann dies durch Erfassung und Auswertung mittels Kl oder der gewichteten Mittelwertbildung durch die Kaffeemaschine selbst erlernt werden.

Optional können neben den Verbrauchsprofilen weitere Merkmale, wie Wetter, Verkehrsmeldungen z.B. Verkehrslage über Google Maps, Beobachtungen des Umfeldes (Kaffeemaschine, Gebäude, Parkplatz) hinzugezogen werden.

Mit dieser Information kann nun eine bedarfsgerechte Befüllung des Vorratsbehälters gesteuert werden, d.h. es kann bestimmt werden, wieviel Kaffee vorgebrüht werden muss. Es können variable Schwellenwerte für voll und für leer festgelegt werden. Es können Zeiträume bestimmt werden, an denen der Vorratsbehälter nicht benötigt wird und für eine automatische Reinigung bzw. Spülung zur Verfügung steht, um anschließend für die nächste anstehende, prognostizierte Nutzung bereitzustehen.

Es ist weiter bevorzugt, dass der Getränkebereiter für die KI-gestützte Vorhersage und/oder für die Vorhersage auf Basis von mathematischen Berechnungen, insbesondere auf Basis einer gewichteten Mittelwertbildung, eine Auswerteeinheit aufweist, die mit der Messeinheit kommuniziert und derart ausgebildet ist, dass sie die von der Messeinheit übermittelten Daten auswertet und daraus die Menge von neu zu brühendem Getränk ermittelt. Es ist somit bevorzugt, dass die Auswerteeinheit des Getränkebereiters derart ausgebildet ist (bzw. konfiguriert ist), dass sie die von der Erfassungseinheit übermittelten Daten auswertet und die von der Messeinheit übermittelten Daten auswertet und daraus (d. h. aus den ausgewerteten Daten der Erfassungseinheit und der Messeinheit) die Menge von neu zu brühendem Getränk ermittelt.

Vorzugsweise weist der Vorratsbehälter eine Isolierung auf, und ist im Getränkebereiter angeordnet oder als externer Vorratsbehälter mit dem Getränkebereiter verbunden.

Erfindungsgemäß wird ebenso ein Verfahren zur Betriebssteuerung eines Getränkebereiters bereitgestellt, wobei der Getränkebereiter folgende Komponenten aufweist:
a) eine Brüheinheit,
b) einen Vorratsbehälter für mindestens ein Getränk,
c) mindestens eine Erfassungseinheit zur Erfassung des Füllstands im Vorratsbehälter, der Menge des in der Brüheinheit gebrühten Getränks und/oder der Menge des vom Nutzer verbrauchten Getränks,
d) eine mit der mindestens einen Erfassungseinheit kommunizierende Auswerteeinheit, sowie
e) eine Steuerungseinheit zur Steuerung der Menge des in der Brüheinheit zu brühenden Getränks.

Bei dem erfindungsgemäßen Verfahren wertet die Auswertungseinheit die von der Erfassungseinheit übermittelten Daten aus und ermittelt daraus die Menge von neu zu brühendem Getränk. Die Steuerungseinheit stellt anschließend basierend auf dem Auswertungsergebnis der Auswertungseinheit die Menge des in der Brüheinheit zu brühenden Getränks zur gewünschten Füllmenge im Vorratsbehälter ein.

Die Steuerungseinheit erfasst also unmittelbar oder mittelbar die zu brühende Menge des Getränkes und/oder die zu entsorgende Menge des gebrühten Getränks.

Das Verfahren kann umfassen, dass verschiedene Grundeinstellungen in der Steuerungseinheit hinterlegt werden, wobei diese Grundeinstellungen bevorzugt vom Benutzer hinsichtlich auswählbarer Parameter verändert werden und als mindestens ein Betriebsmodus einstellgestellt werden.

Es ist bevorzugt, dass mindestens ein Betriebsmodus als Grundeinstellung in der Steuerungseinheit hinterlegt wird und/oder die Grundeinstellung, die beispielsweise die Performance oder den Frischegrad verbessert, hinsichtlich verschiedener gewichteter Parameter geändert wird.

Alternativ oder zusätzlich stellt der mindestens eine Betriebsmodus einen Volllastmodus, einen Frischemodus und/oder einen Effizienzmodus des Getränkebereiters dar, wobei bevorzugt ein erster Betriebsmodus einen Volllastmodus, ein zweiter Betriebsmodus einen Frischemodus und ein dritter Betriebsmodus einen Effizienzmodus abbildet (bzw. darstellt), wobei zwischen diesen Betriebsmodi auch Übergangsmodi einstellbar sind. Somit kann als der mindestens eine Betriebsmodus ein Betriebsmodus eingestellt werden, der ausgewählt ist aus der Gruppe bestehend aus Volllastmodus, Frischemodus und Effizienzmodus, wobei vorzugsweise zwischen diesen Betriebsmodi auch Übergangsmodi eingestellt werden, und wobei der Frischemodus insbesondere umfasst, eine im Vorratsbehälter befindliche, ältere Brühcharge mit frisch gebrühtem Getränk (z. B. Kaffee) zu vermengen.

Es ist bevorzugt, dass der Getränkebereiter, bevorzugt die Auswerteeinheit des Getränkebereiters, basierend auf bisherigen Verbrauchswerten in Bezug auf eine Menge eines vom Nutzer verbrauchten Getränks eine KI-gestützte Vorhersage vonzukünftigen Verbrauchswerten in Bezug auf eine Menge eines vom Nutzer verbrauchten Getränks generiert und/oder durch den Getränkebereiter, bevorzugt durch die Auswerteeinheit des Getränkebereiters, eine Vorhersage von zukünftigen Verbrauchswerten in Bezug auf eine Menge eines vom Nutzer verbrauchten Getränks auf Basis einer von mathematischen Berechnungen, beispielsweise einer gewichteten Mittelwertbildung, erfolgt. Die Verbrauchswerte können (z, B. in der Kl-gestützten Vorhersage) in Abhängigkeit von Messdaten von mindestens einer Messeinheit, die sich auf Umgebungsparameter beziehen, generiert, wobei mit der mindestens einen Messeinheit als Umgebungsparameter bevorzugt ein Parameter ausgewählt aus der Gruppe bestehend aus Jahreszeit, Uhrzeit, Umgebungstemperatur, Lokalität, Wetter, Verkehrslage in der Umgebung des Getränkebereiters und Kombinationen dieser Parameter erfasst wird/werden. Besonders bevorzugt sind alle diese Parameter erfassbar.

Eine bevorzugte Variante sieht vor, dass der Getränkebereiter für die Kl-gestützte Einstellung und/oder für die Vorhersage auf Basis von mathematischen Berechnungen, insbesondere auf Basis einer gewichteten Mittelwertbildung, eine Auswerteeinheit aufweist, die mit der Messeinheit kommuniziert und die von der Messeinheit übermittelten Daten auswertet und daraus die Menge von neu zu brühendem Getränk ermittelt. Es ist somit bevorzugt, dass die Auswerteeinheit des Getränkebereiters derart ausgebildet ist (bzw. konfiguriert ist), dass siedie von der Erfassungseinheit übermittelten Daten auswertet und die von der Messeinheit übermittelten Daten auswertet und daraus (d. h. aus den ausgewerteten Daten der Erfassungseinheit und der Messeinheit) die Menge von neu zu brühendem Getränk ermittelt.

Anhand der nachfolgenden Beispiele und Figuren soll der erfindungsgemäße Gegenstand näher erläutert werden, ohne diesen auf die hier gezeigten spezifischen Ausführungsformen einschränken zu wollen.

### Beispiel 1

Der Benutzer wählt einen gleichmäßigen Kompromiss der Modi aus, in dem er alle drei 3 Modi auf medium setzt. So kann die Befüllung eines 4L-Vorratsbehälters mit 2 L erfolgen, um einen Kompromiss zwischen Frischemodus und Volllastmodus zu gewährleisten. Nach 1 h wird dann, je nach Füllstand, auf 2 L nachgebrüht oder eine Teilmenge abgelassen und dann entsprechend auf 2 L nachgebrüht, um einen Frischefaktor zu erreichen, der einer Bevorratungszeit von 30 min entspricht.

Wird durch das Benutzerprofil ein großer Kaffeebedarf mit hoher Entnahmefrequenz erwartet, kann die Befüllung z.B. mit 3 L erfolgen, womit größere Nachbrühchargen oder Nachbrühen in kürzeren Zeitabständen erfolgen kann.

### Beispiel 2

Die Kaffeemaschine wird in einer Gastwirtschaft mit Biergarten betrieben, wobei der Biergarten einige Tage wegen schlechten Wetters geschlossen war. Die Steuerung der Befüllung und Füllmengen des Vorratsbehälters erfolgt mit rollierend angepassten Benutzerprofilen der bisherigen Nutzung. Wird die Au-ßenbewirtschaftung geöffnet, so kann dies durch den Benutzer eingestellt werden. Dadurch werden zur Steuerung des Vorratsbehälters nicht die bisherigen Benutzerprofile verwendet, sondern die in der Vergangenheit ermittelten Benutzerprofile für die Gastwirtschaft mit dem Biergarten.

Eine ähnliche Anwendung ist z.B. für eine Raststätte denkbar, welche in der Ferienzeit ein erhöhtes Kundenaufkommen hat, im Gegensatz zu normalen Betriebstagen.

### Beispiel 3

Der Benutzer wählt eine Einstellung von 60% Performance (Performance-Faktor) und 70% Frische (minimaler Frischegrad). Die Kaffeemaschine analysiert zyklisch anhand einer gleitenden Mittelwertbildung die zu erwartenden Getränkemengen für den kommenden Zeitraum. Diese Mengen werden mit dem Performance-Faktor verrechnet und die Kaffeemaschine stellt eine dem Bedarf angepasste Getränkemenge im Vorratsbehälter zur Verfügung. Gleichzeitig analysiert die Kaffeemaschine die im Vorratsbehälter vorherrschende Frische, sinkt diese unter die vom Kunden eingestellte minimale Frische von hier 70% wird der Vorratsbehälter teilentleert und frischer Kaffee in den Vorratsbehälter gebrüht. Durch die Zyklische z.B. stündliche Analyse des Getränkebedarfs wird automatisch zu Stoßzeiten eine größere Kaffeemenge im Vorratsbehälter vorgehalten wodurch die Verfügbarkeit und Performance hoch ist. Während zu weniger frequentierten Zeiten die bevorratete Menge automatisch reduziert wird um die zu entsorgende Menge zu reduzieren und die Frische erhöht wird.

## Patentansprüche

1. Getränkebereiter mit steuerbarem Betrieb enthaltend
a) eine Brüheinheit,
b) einen Vorratsbehälter für mindestens ein Getränk,
c) mindestens eine Erfassungseinheit zur Erfassung des Füllstands im Vorratsbehälter, der Menge des in der Brüheinheit gebrühten Getränks und/oder der Menge des vom Nutzer verbrauchten Getränks,
d) eine mit der mindestens einen Erfassungseinheit kommunizierende Auswerteeinheit, die derart ausgebildet ist, dass sie die von der Erfassungseinheit übermittelten Daten auswertet und daraus die Menge von neu zu brühendem Getränk ermittelt, sowie
e) eine Steuerungseinheit zur Steuerung der Menge des in der Brüheinheit zu brühenden Getränks zur gewünschten Füllmenge im Vorratsbehälter basierend auf dem Auswertungsergebnis der Auswertungseinheit.

2. Getränkebereiter nach Anspruch 1, **dadurch gekennzeichnet, dass** die mindestens eine Erfassungseinheit
i) eine aktive Sensorik aufweist oder daraus besteht, wobei die aktive Sensorik bevorzugt ausgewählt ist aus der Gruppe bestehend aus Füllstandsensoren, Füllstandssonden und Kombinationen hiervon ; und/oder
ii) eine passive Sensorik aufweist oder daraus besteht, die auf einer Berechnung beruht, wobei die passive Sensorik bevorzugt konfiguriert ist, eine Getränkemenge, die in den Vorratsbehälter fließt und/oder die aus dem Vorratsbehälter abfließt, zu berechnen, wobei die passive Sensorik besonders bevorzugt konfiguriert ist, ein erstes mathematisches Produkt aus einer Öffnungsdauer eines ersten Ventils des Getränkebereiters und einem ersten Volumenstrom von Getränk durch das erste Ventil in den Vorratsbehälter hinein zu berechnen und ein zweites mathematisches Produkt aus einer Öffnungsdauer eines zweiten Ventils des Getränkebereiters und einem zweiten Volumenstrom von Getränk durch das zweite Ventil aus dem Vorratsbehälter heraus zu berechnen, wobei die passive Sensorik insbesondere konfiguriert ist, eine im Vorratsbehälter verfügbare Getränkemenge aus einer Differenz des ersten und zweiten mathematischen Produkts zu ermitteln.

3. Getränkebereiter nach einem der Ansprüche 1 oder 2, **dadurch gekennzeichnet, dass** die Steuerungseinheit derart ausgebildet ist, dass verschiedene Grundeinstellungen in der Steuerungseinheit hinterlegt sind, wobei diese Grundeinstellungen vom Benutzer hinsichtlich auswählbarer Parameter manuell veränderbar sind und als mindestens ein Betriebsmodus einstellbar sind.

4. Getränkebereiter nach Anspruch 3, **dadurch gekennzeichnet, dass** die auswählbaren Parameter Werte umfassen, die unmittelbar oder mittelbar auf eine Performance, eine Kaffeequalität und eine Kaffeevergeudung schließen lassen, wobei als der mindestens ein Betriebsmodus ein Betriebsmodus eingestellt werden kann, der ausgewählt ist aus der Gruppe bestehend aus Volllastmodus, Frischemodus und Effizienzmodus,wobei zwischen diesen Betriebsmodi auch Übergangsmodi einstellbar sind, und wobei der Frischemodus insbesondere umfasst, eine im Vorratsbehälter befindliche, ältere Brühcharge mit frisch gebrühtem Getränk zu vermengen.

5. Getränkebereiter nach einem der Ansprüche 1 bis 4, **dadurch gekennzeichnet, dass** der Getränkebereiter, bevorzugt die Auswerteeinheit des Getränkebereiters, basierend auf bisherigen Verbrauchswerten in Bezug auf eine Menge eines vom Nutzer verbrauchten Getränks eine KI-gestützte Vorhersage von zukünftigen Verbrauchswerten in Bezug auf eine Menge eines vom Nutzer verbrauchten Getränks generiert und/oder durch den Getränkebereiter, bevorzugt durch die Auswerteeinheit des Getränkebereiters, eine Vorhersage von zukünftigen Verbrauchswerten in Bezug auf eine Menge eines vom Nutzer verbrauchten Getränks auf Basis von mathematischen Berechnungen, insbesondere auf Basis einer gewichteten Mittelwertbildung, erfolgt, wobei die zukünftigen Verbrauchswerte in Abhängigkeit von Messdaten von mindestens einer Messeinheit, die sich auf Umgebungsparameter beziehen, generiert werden, wobei die mindestens eine Messeinheit bevorzugt so ausgebildet ist, dass als Umgebungsparameter ein Parameter ausgewählt aus der Gruppe bestehend aus Jahreszeit, Wochentag, Datum, Uhrzeit, Umgebungstemperatur, Lokalität, Wetter, Verkehrslage in der Umgebung des Getränkebereiters und Kombinationen dieser Parameter erfassbar ist/sind.

6. Getränkebereiter nach Anspruch 5, **dadurch gekennzeichnet, dass** die Auswerteeinheit des Getränkebereiters mit der Messeinheit kommuniziert und derart ausgebildet ist, dass sie die von der Erfassungseinheit übermittelten Daten auswertet und die von der Messeinheit übermittelten Daten auswertet und daraus die Menge von neu zu brühendem Getränk ermittelt.

7. Getränkebereiter nach einem der Ansprüche 1 bis 6, **dadurch gekennzeichnet, dass** der Vorratsbehälter eine Isolierung aufweist, und im Getränkebereiter angeordnet ist oder als externer Vorratsbehälter mit dem Getränkebereiter verbunden ist.

8. Verfahren zur Betriebssteuerung eines Getränkebereiters enthaltend
a) eine Brüheinheit,
b) einen Vorratsbehälter für mindestens ein Getränk,
c) mindestens eine Erfassungseinheit zur Erfassung des Füllstands im Vorratsbehälter, der Menge des in der Brüheinheit gebrühten Getränks und/oder der Menge des vom Nutzer verbrauchten Getränks,
d) eine mit der mindestens einen Erfassungseinheit kommunizierende Auswerteeinheit, sowie
e) eine Steuerungseinheit zur Steuerung der Menge des in der Brüheinheit zu brühenden Getränks,
wobei die Auswertungseinheit die von der Erfassungseinheit übermittelten Daten auswertet und daraus die Menge von neu zu brühendem Getränk ermittelt und die Steuerungseinheit basierend auf dem Auswertungsergebnis der Auswertungseinheit die Menge des in der Brüheinheit zu brühenden Getränks zur gewünschten Füllmenge im Vorratsbehälter einstellt.

9. Verfahren nach Anspruch 8, **dadurch gekennzeichnet, dass** verschiedene Grundeinstellungen in der Steuerungseinheit hinterlegt werden, wobei diese Grundeinstellungen vom Benutzer hinsichtlich auswählbarer Parameter bevorzugt verändert und als mindestens ein Betriebsmodus einstellgestellt werden.

10. Verfahren nach Anspruch 9, **dadurch gekennzeichnet, dass** als der mindestens eine Betriebsmodus ein Betriebsmodus eingestellt wird, der ausgewählt ist aus der Gruppe bestehend aus Volllastmodus, Frischemodus und Effizienzmodus, wobei vorzugsweise zwischen diesen Betriebsmodi auch Übergangsmodi eingestellt werden, und wobei der Frischemodus insbesondere umfasst, eine im Vorratsbehälter befindliche, ältere Brühcharge mit frisch gebrühtem Getränk zu vermengen.

11. Verfahren nach einem der Ansprüche 8 bis 10, **dadurch gekennzeichnet, dass** der Getränkebereiter, bevorzugt die Auswerteeinheit des Getränkebereiters, basierend auf bisherigen Verbrauchswerten in Bezug auf eine Menge eines vom Nutzer verbrauchten Getränks eine Kl-gestützte Vorhersage von zukünftigen Verbrauchswerten in Bezug auf eine Menge eines vom Nutzer verbrauchten Getränks generiert oder durch den Getränkebereiter, bevorzugt durch die Auswerteeinheit des Getränkebereiters, eine Vorhersage von zukünftigen Verbrauchswerten in Bezug auf eine Menge eines vom Nutzer verbrauchten Getränks auf Basis einer von mathematischen Berechnungen, beispielsweise einer gewichteten Mittelwertbildung, erfolgt, wobei die zukünftigen Verbrauchswerte in Abhängigkeit von Messdaten von mindestens einer Messeinheit, die sich auf Umgebungsparameter beziehen, generiert werden, wobei mit der mindestens einen Messeinheit als Umgebungsparameter bevorzugt ein Parameter ausgewählt aus der Gruppe bestehend aus Jahreszeit, Wochentag, Datum, Uhrzeit, Umgebungstemperatur, Lokalität, Wetter, Verkehrslage in der Umgebung des Getränkebereiters und Kombinationen dieser Parameter erfasst wird/werden.

12. Verfahren nach Anspruch 11, **dadurch gekennzeichnet, dass** die Auswerteeinheit mit der Messeinheit kommuniziert und die von der Erfassungseinheit übermittelten Daten auswertet und die von der Messeinheit übermittelten Daten auswertet und daraus die Menge von neu zu brühendem Getränk ermittelt.
